(19) Europäisches Patentamt
European Patent Office
Office européen des brevets

(11) Publication number: 0 114 960
A2

# (12) EUROPEAN PATENT APPLICATION

(21) Application number: 83111632.2

(22) Date of filing: 22.11.83

(51) Int. Cl.[3]: C 05 G 3/00
A 01 G 7/00

(30) Priority: 30.12.82 US 454797
03.01.83 US 455094

(43) Date of publication of application:
08.08.84 Bulletin 84/32

(84) Designated Contracting States:
AT DE FR GB IT

(71) Applicant: ALLIED CORPORATION
Columbia Road and Park Avenue P.O. Box 2245R (Law Dept.)
Morristown New Jersey 07960(US)

(72) Inventor: Pace, Gary Michael
2674 Seneca Turnpike
Marcellus New York 13108(US)

(72) Inventor: Friedrich, James Wayne
34 Van Hoesen Street
Cortland New York 13045(US)

(74) Representative: Baillie, Iain Cameron et al,
c/o Ladas & Parry Isartorplatz 5
D-8000 München 2(DE)

## (54) Foliar fertilizers which increase yield of field crop plants which fertilizers contain substituted thiourea, substituted urea.

(57) A composition and method for enhancing the yield of field crops by incorporating one or more compounds selected from the group consisting alpha-oximino alkanoic acid, substituted urea and/or substituted thiourea compounds in a foliar fertilizer composition containing one or more sources of nitrogen and optionally one or more additional macronutrients and/or micronutrients and applying same to the foliage of said crops.

EP 0 114 960 A2

Croydon Printing Company Ltd.

DESCRIPTION

FOLIAR FERTILIZERS WHICH INCREASE YIELD OF FIELD CROP PLANTS WHICH FERTILIZERS CONTAIN SUBSTITUTED THIOUREA, SUBSTITUTED UREA AND/OR ALPHA-OXIMINO ALKANOIC ACID COMPOUNDS

1. Field of the Invention

This invention relates to a unique foliar fertilizer formulation and method of applying same to field crops, particularly legume crops such as soybean, and cereal grain crops, such as corn (maize). More particularly, this invention relates to foliar fertilizer formulations and methods which provide outstanding increases in yield of field crops.

2. Prior Art

Substituted thiourea and substituted urea compounds are known as plant growth regulators and are known to provide beneficial effects on plants. For example, U.S. Patent No. 3,989,500 describes a method of increasing the yield per plant and per acre of crops such as legumes and those of the genus Gossypium, by applying certain specified thiourea plant growth regulators to the foliage of the plants between the period of early flowering and early maturation of the fruit.

It is also known that various alpha-oximino alkanoic acid derivatives are plant growth regulators and can be applied to plants to increase crop yield. For example, U.S. Patent Nos. 3,873,301 and 4,017,301 describe the use of various nitro-alpha-oximino alkanoic

acid derivative for increasing crop yield, and U.S. Patent No. 3,923,491 describes the use of other derivatized alpha-oximino alkanoic acid compounds for increasing crop yield.

It is recognized by those skilled in the art that plant growth regulator formulations have inconsistent effects on crop yield. This inconsistency can be attributed to environmental, developmental, and genetic effects as well as other unidentified factors.

In foliar feeding of plants, nutrients are dissolved in water and the aqueous solution is sprayed on the leaves of the plants. U.S. Patent No. 3,087,806 describes a method for improving the yield of soybeans by spraying the plants periodically throughout their growth with an aqueous solution of urea phosphate. The patent recommends twice weekly applications, and in an example such twice weekly sprayings were carried out for a period of 18 weeks.

U.S. Patent No. 3,558,300 describes a method for foliar feeding of field crops, including soybeans and cereal grains, with an aqueous solution of an ammonium polyphosphate. Adequate ground fertilizer is employed in conjunction with the foliar feeding. It is claimed that the method improves the stress resistance of the plants. The ammonium polyphosphate solution is described as being applied during the crop growth period up to the flowering period.

U.S. Patent No. 4,038,064 describes a foliar fertilizer composition containing water, urea, potassium, sulfur, phosphorus in the form of linear polyphosphates, and micronutrients such as sulfur, boron, zinc, iron, manganese and copper. The patent describes a process of improving soybean plant yields by applying the composition to the foliage of the soybean plant. The patent states that the composition must be applied during the period from shortly before flowering to shortly after the beginning of seed fill.

U.S. Patent No. 4,146,383 describes a method for

improving the yield of legume field crops and cereal grain crops by applying a foliar fertilizer composition containing sources of nitrogen, phosphorus, potassium and sulfur to the foliage of the crops during the seed filling period. The patent specifies that prior to the seed filling period, nutrients are supplied to the growing legume and cereal crops exclusively from the soil.

U.S. Patent No. 4,033,146 describes a method of fertilizing conifer forests with nitrogen containing compounds by direct aerial application to the conifer foliage of an aqueous solution containing a nitrogen source, such as urea, ammonia, and nitrates of ammonium, calcium and potassium; ammonium phosphates and sulfates or a combination thereof. The patent states that other micronutrients including iron, manganese, copper and zinc can be added to the solution.

U.S. Patent No. 4,033,747 discloses a method of fertilizing conifer forests by direct application to the foliage of the conifers a solution containing a water-soluble nitrogen source. The patent also states that the solution may include sources of calcium, potassium, phosphorus, sulfur and minor trace metal nutrients such as iron, cobalt, molybdenum, manganese, copper, boron, zinc, magnesium and mixtures thereof.

It has been reported that mixed results have been achieved with foliar fertilization of crops, especially field crops and more particularly soybeans. While some tests suggested that yield improvements could be achieved, others suggested that no improvements at all were realized from foliar application of nitrogen-phosphorus-potassium (N-P-K) solutions. The January, 1969 issue on "World Farming" contains a more complete dissertation of the benefits of N-P-K foliar fertilization and the limits of application level beyond which leaf scorch occurs. Another article reprinted from Ohio Farm and Home Research, Vol. 41, No. 302, September-October, 1956, reports no benefit from foliar application of N-P-K solutions.

Unsuccessful attempts to increase yield by foliar fertilization have been reported by Mederski and Volk for wheat, corn, soybeans, oats and alfalfa. When the field crops were grown in soils with adequate fertility they failed to respond positively to foliar sprays containing N, P, and K. (Mederski, H. J. and Volk , G. W. "Foliar Fertilization of Field Crops," Ohio Agr. Exp. Sta. Research Cir 35, 1956). It has ume and cereal grain crops which have adequate soil fertilization will not produce significantly higher yields of the grain by supplemental foliar fertilization, although it has been recognized that the nutrients in the spray are absorbed by the leaves of the plants.

It was speculated that the adverse results were due to varying environmental factors, soil fertilizers and especially to the inability to apply more than small ?quantities of foliar fertilizers without damaging plant tissue, especially foliage. Several methods have been proposed for obviating the burning or plasmolysis effects of foliar application of fertilizers. For example, U.S. Patent Nos. 4,318,729; 3,677,746; and 4,033,745 teach the use of urea formaldehyde polymers to obviate the burning problem by a controlled slow release of the nitrogen over an extended period of time. However, these compositions also suffer from several disadvantages. For example, certain of these compositions release nitrogen at such a reduced rate that the growth of the plant is not affected to any appreciable extent, and significant amounts of nitrogen remain unreleased at the end of the growing season and is lost.

## SUMMARY OF THE INVENTION

The present invention is based on the discovery that inclusion of certain substituted thiourea, substituted urea, alpha oximino alkanoic acid compounds or a combination thereof in aqueous fertilizers containing one or more sources of nitrogen, especially urea, and optionally other macronutrients and micronutrients such as phosphorus, sulfur, potassium and the like has a

pronounced synergistic effect on plant yield when applied to the foliage of the plant. Therefore, in accordance with this invention there is provided an improved foliar fertilizer composition of the type containing one or more sources of nitrogen and optionally, one or more sources of potassium, one or more sources of phosphorus, one or more sources of sulfur and/or one or more sources of other plant micronutrients said improvement comprising a "synergistically effective amount" of one or more compounds selected from the group consisting of substituted urea or thiourea compounds of the formula:

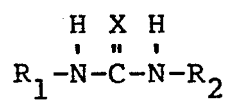

and alpha-oximino alkanoic acid compounds of the formula:

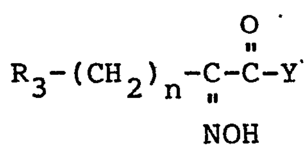

and ester, amide, sulfamide and salt derivatives of said acid compounds, wherein:

X is sulfur or oxygen;

$R_1$ and $R_2$ are the same or different and are individually aliphatic hydrocarbons of 1 to about 12 carbon atoms or aromatic hydrocarbons having up to about 12 carbon atoms;

n is an integer from 1 to about 12;

$R_3$ is hydrogen, alkyl, nitro, cycloalkyl, aralkyl, aryl, hetrocyclic, alkenyl or alkynyl; and

Y is -OZ, -SZ, NZZ' or -OZ", wherein:

Z and Z' are the same or different and are individually hydrogen, alkyl, cycloalkenyl, cycloalkyl, aralkyl, alkaryl, aryl, heterocyclic, alkynyl or alkenyl; and

Z" is an alkali metal.

This linvention also provides a method of enhancing the plants by applying a crop enhancing effective amount of the composition of this invention to the foliage of such crop plants.

DESCRIPTION OF THE PREFERRED EMBODIMENTS

One essential ingredient of the composition of this invention is a "synergistically effective amount" of one or more alpha-oximino alkanoic acid, substituted urea and/or substituted thiourea compounds or precursor compounds which are capable of forming such alpha-oximino alkanoic acid, urea and/or thiourea compounds in situ. As used herein, a synergistically effective amount" is an amount of one or more alpha-oximino alkanoic acid, substituted urea and/or substituted thiourea compounds or precursor compounds which is sufficient to enhance the utilization of the fertilizer nutrients which are applied to the foliage of a plant in combination with such compounds to any extent. A result of the enhanced utilization is an increase in yield. Usually, the above goal will be achieved if the composition contains at least about 0.01 weight percent of said compounds based on the total weight of the composition. In the preferred embodiments of the invention, the amount of such compounds contained in the composition will vary from about 0.01 to about 10.0 weight percent based on the total weight of the composition, and in the particularly preferred embodiments will vary from about 0.05 to about 2.0 weight percent on the same basis. Amongst these particularly preferred embodiments of the invention most preferred are those in which the weight percent of such compounds varies from about 0.1 to about 1.0 on the above described basis.

Useful substituted urea and/or thiourea compounds are of the formula:

$$R_1-\overset{H}{\overset{|}{N}}-\overset{X}{\overset{\|}{C}}-\overset{H}{\overset{|}{N}}-R_2$$

X is sulfur or oxygen; and

$R_1$ and $R_2$ are the same or different and are selected from the group consisting of substituted and unsubstituted aliphatic hydrocarbons of 1 to 12 carbon atoms and aromatic hydrocarbon up to 12 carbon atoms.

Illustrative of aliphatic $R_1$ and $R_2$ radicals are alkyl groups of from about 1 to about 12 carbon atoms, such as methyl, pentyl, hexyl, isopropyl, dodecyl and like groups; alkenyl group of from about 2 to about 12 carbon atoms such as vinyl, 2-butenyl, 3-dodecyl and the like; and alkenyl of from about 2 to about 12 carbon atoms, such as ethynyl, 3-butynyl and 4-octynyl. Exemplary of aromatic $R_1$ and $R_2$ radicals are aryl and aralkyl groups of from about 7 to about 12 carbon atoms, such as benzyl, 3-phenylpropyl, 6-benzylheptyl and the like; alkaryl of from about 7 to about 12 carbon atoms, such as tolyl, disopropylphenyl, 2,5-diethylphenyl and the like; and alkyl substituted aralkyl of from about 8 to about 12 carbon atoms, such as 4-butylbenzyl, 2-methyl- benzyl, 4-(3-isopropylphenyl)benzyl and the like. Preferred for use in the practice of the present invention are compounds defined by the above referenced formula wherein $R_1$ and $R_2$ are independently selected from the group consisting of lower aliphatic hydrocarbon (i.e., aliphatic hydrocarbon of 1 to about 6 carbon atoms), aralkyl hydrocarbon of from about 7 to about 12 carbon atoms and alkyl substituted aralkyl hydrocarbons of from about 8 to about 12 carbon atoms. Illustrative of substituted urea and thiourea compounds for use in the preferred embodiments of the invention are the following compounds.

(1) $$C_6H_5-CH_2-\overset{H}{N}-\overset{X}{C}-\overset{H}{N}-(CH_2)_5-C_6H_5$$

(2) $$C_6H_5-CH_2-\overset{H}{N}-\overset{X}{C}-\overset{H}{N}-CH_2-\ (CH_2)_3CH_3$$

(3) $$C_6H_4-\ CH_2-\overset{H}{N}-\overset{X}{C}-\overset{H}{N}-CH_2-C_6H_5$$

(4) $$C_6H_5-(CH_2)_6-\overset{H}{N}-\overset{X}{C}-\overset{H}{N}-CH_2-C_6H_5$$

(5) $$CH_3-CH_2-CH_2-\overset{H}{N}-\overset{X}{C}-\overset{H}{N}-CH_2-CH=CH_2$$

Thiourea compounds are particularly preferred for use in the practice of this invention and thiourea compounds which have been found especially effective are 1,3-diallyl-2-thiourea of the formula:

$$CH_2=CH-CH_2-\overset{H}{N}-\overset{S}{C}-\overset{H}{N}-CH_2-CH=CH_2$$

and 1,3-dibenzyl-2-thiourea of the formula:

$$C_6H_5-CH_2-\overset{H}{N}-\overset{S}{C}-\overset{H}{N}-CH_2-C_6H_5$$

Substituted thiourea and urea compounds are well-known compounds which can be obtained from commercial sources or prepared in accordance with well known preparative techniques. For example, thiourea compounds can be readily prepared in accordance with the procedures described in Organic Synthesis, Vartkes Megraichian Reinhold Publishing Company, U.S. Patent No. 3,989,500 and references cited therein.

Alpha-oximino alkanoic acids which are useful in the practice of this invention as those of the formula:

$$R_3-(CH_2)_n-\underset{\underset{NOH}{\|}}{C}-\overset{\overset{O}{\|}}{C}-Y$$

and ester, sulfamide, amide and salt derivatives thereof, wherein:

n is an integer from 1 to 12;

$R_3$ is selected from the group consisting of hydrogen, alkyl, nitro, cycloalkyl, aralkyl, alkaryl, aryl, heterocyclic, alkenyl and alkynyl; and

Y is selected from the group consisting of OZ, SZ, NZZ' and OZ", wherein:

Z and Z' are the same or different and are independently selected from the group consisting of hydrogen, alkyl, cycloalkyl, cycloalkenyl, aralkyl, alkaryl, aryl, heterocyclic, alkenyl and alkynyl; and

Z" is an alkali metal.

Such useful alpha-oximino alkanoic acid compounds and their ester, sulfamide, amide and salt derivatives are herein collectively referred to as alpha-oximino alkanoic acid compounds.

The alkyl group generally contains from 1 to about 12 carbon atoms and preferably contains from 1 to 5 carbon atoms. Examples of such alkyl groups are methyl, isobutyl, pentyl, dodecyl and the like. The cycloalkyl and cycloalkenyl groups generally contain from about 3 to abut 12 carbon atoms and preferably contain from about 3 to about 6 carbon atoms. Illustrative of such

cycloalkyl and cycloalkenyl groups are cyclobutyl, cyclohexyl, cyclohexenyl, cyclopentyl, cyclopentenyl and cyclooctyl. The aralkyl group generally consists of phenyl groups or alkyl substituted phenyl wherein the alkyl substituent includes from 1 to about 12 carbon atoms and preferably from 1 to about 6 carbon atoms. Examples of such aralkyl groups are benzyl, o-ethylbenzyl, phenylpentyl, 6-phenyldodecyl and the like. The alkaryl group generally consists of phenyl or tolyl as the aryl group and alkyl having 1 to about 12 carbon atoms and preferably from 1 to about 6 carbon atoms as the alkyl group. Examples of such alkaryl groups are tolyl, o-ethyltolyl, m-hexyltolyl, and the like. Illustrative of useful heterocyclic groups are thienyl, pyridyl, piperidyl, pyrimidyl and the like.

The alkenyl group generally contains from about 3 to about 12 carbon atoms and preferably contains from about 3 to about 5 carbon atoms. Examples of such alkenyl groups are propenyl, butenyl, decenyl, octenyl, hexenyl and the like. The alkynyl group generally contains from about 3 to about 12 carbon atoms and preferably from 3 to 6 carbon atoms. Examples of such alkynyl groups are propynyl, hexynyl, decenyl and the like.

Examples of useful plant growth regulants which can be used in the practice of the present invention wherein $R_3$ is selected from the group consisting of hydrogen, alkyl, cycloalkyl, aralkyl, alkaryl, aryl, heterocyclic, alkenyl and alkynyl and wherein Y is selected from the group consisting of OZ, SZ and NZZ' in which Z and Z' are as defined above are as follows: octyl 2-oximinododecanoate, dodecyl 2-oximinodecanoate, octyl 6-cyclobutyl-2-oximinohexanoate, cyclohexyl 6-cyclohexy-2-oximinohexanoate, cyclooctyl 12-phenyl-2-oximinododecanoate, benzyl 6- phenyl-2-ox minohexanamide, benzyl 12-(m-tolyl)-2- oximinodode anoate, m-tolyl 8-(o-ethylbenzyl)-2- oximinooctanoate, phenyl 5-(2-thienyl)-2-oximinopen- tanoate, m-olyl 3-(2-pyridyl)-2-oximinopropanoate, o-ethylbenzyl 4-(2-propynyl)-2-

oximinobutanoate, m-isobutylbenzyl 10-(2-propenyl)-2-oximinodecanoate, 2-thienyl 6 (2-hexynyl)-2-oximinohexanoate, 2-pyridyl 12-(2-hexynyl)-2-oximinododecanoate, N-piperidyl 11-phenyl-2-ox minoundecanoate, 2-propenyl 6-phenyl-2-oximinohexanoate, 2-decenyl 8-(n-phenyl-pentyl)-2-oximinooctanoate, 2-butenyl 2-oximinoheptanoate, 2-propynyl 2-ximinohexanoate, 2-decenyl 10-(m-isobutyl enzyl)-2-oximinodecanoate, 2-hexynyl 12-phenyl-2-oxminododecanmate, 2-oximinopentanoic acid, 5-methyl-2-ximinohexanoic acid, 2-propynyl 2-oximino- pentanoate, N,N-dibutyl 6-methyl-2-oximinoheptanamide, N-cyclohexyl 2-oximinobutanamide, N-piperidino 2-oxiiminopentanamide, N-ethyl, N-(m-tolyl)-2-oximino- decanamide, 2-oximinohexanoic acid, phenyl 7-(m-tolyl)-2-oximinoth oheptanoate, 2-oximinopentanoic acid and ethyl 10-(2-butenyl)-2-oximinthiodecanoate, alkaryl, aryl, heter cyclic, alkenyl or alkynyl are octyl 12-nitro-2-ximinododecanoate, dodecyl 10-nitro-2-oximinodecanoate, octyl 6-nitro-2-oximinohexanoate, cyclohexyl 2-nitro-2-oximinohexanoate, cyclooctyl 10-nitro-2-oximinodecanoate, benzyl 6-nitro-2-oximinohexanoate, benzyl 12-nitro-2-oximinododecanoate m-cresyl-8-nitro-2-oximinooctnoate, phenyl 5-nitro-2-oximinopentnoate, m-tolyl 3-nitro-2-oximinopropanoate, o-etheylbenel 4-nitro-2-oximinobutanoate, m-isobutyl- benzyl 10-nitro-2-oximinodecanoate, 2-thienyl 6-nitro-2-oximinohexanoate, 2-pyridyl, 12-nitro-2-oximinodode anoate, 2-pyridyl 11-nitro-2-oximinounde anoate, 2-propenyl 6-nitro-2-oximinohexanoate, 2-decenyl 8-nitro-2-oximinoocatanoate, 1-butenyl-7-nitro-2-oximinoheptanoate, 2-propynyl 6-nitro-2-oximinodecanoate, 2-hexenyl 12-nitro-2-oximinododecanoate, methyl 6-nitro-2-oximinohexanoate, ethyl 6-nitro-2-oximinohexanoate, 6-nitro-2-oximinohexanoic acid, 10-nitro-2-oximinodecanoic acid, pentyl 8-nitro-2-oximinothiooctanoate n-tolyl 4-nitro-2-oximinothiobutanoate, N-ethyl 6-nitro-2-oximinohexanimide, N-decyl 12-nitro-2-oximinodecanamide,

N-cyclohexyl 3-nitro-2-oximinopropanamide, N-benzyl 6-nitro-2-oximinohexanamide, N-(m-tolyl) 5-nitro-2-oximinopentanamide, N-(2-thienyl) 7-nitro-2-oximinoheptanamide, N-(2-decenyl) 8-nitro-2-oximinooctanamide, N-(2-hexynyl) 12-nitro-2-oximodecanamide, N,N-diethyl 6-nitro-2-oximinohexanamide, N,N-dibenzyl 8-nitro-2-oximinooctanamide, N,N-di(m-N,Ndi(m-thienyl) 10-nitro-2-oximinodecanamide, 8-nitro-2-oximinooctanamide and 6-nitro-2-oximinohexanamide.

Examples of nitro-oximino alkanoic acid derivatives when Y in the general formula is OZ" are sodium 6-nitro-2-oximinohexanoate, potassium 10-nitri-2-oximinodecanoate, lithium 7-nitro-2-oximinoheptanoate, sodium 7-cyclobutyl-2-oximinoheptanoate, potassium 9-isobutyl-2-oximinooctanoate and lithium 3-cyclohexyl-2-oximinopropanoate and the like.

Alpha-oximino alkanoic acids and derivatives thereof which are expecially preferred are methyl 6-nitro-2-oximinohexanoate, ethyl 6-nitro-2-oximinohexanoate, 6-nitro-2-oximinohexanamide, 6-nitro-2-oximinohexanoic acid and alpha-oximinohexanoic acid. Among these especially preferred alpha-oximino alkanoic acids and derivatives, most preferred is 2-oximinohexanoic acid.

Alpha-oximino alkanoic acids which are useful in the conduct of the present invention are known and may be rpepared by conventional means. For example, 2-oximinohexanoic acid may be prepared by reacting n-butyl nitrite and dry hydrogen chhloride with n-butylmalonic acid as described in R.H. Barry and W.H. Harting, 12 J. Org. Chem., 460 (1947). Similarly, ethyl 6-nitro-2-oximinohexanoate which is disclosed in Sayles and Degering, New Synthetic Methods For the Preparation of Lysine, J. Amer. Chem. Soc., 3161,3162-3163, (1949) may be prepared by the reaction of ethyl 2-acetyl-6-nitrohexanoate with n-butyl nitrite; 6-nitro-2-oximinohexanamide can be prepared by the reaction of 2-nitro-6-oximinocyclohexanone with anhydrous ammonia as disclosed in U.S. Pat. application Ser. No. 97,290 filed Dec. 11, 1970 by Fuhrmann et al., entitled: "Ammonolysis of 2-nitro-6-oximino cyclohexanone;" and 6-nitro-2-oximinohexanoic acid can be prepared as describe in B.F. Burrows and W.B. Turner, J. Chem. Soc. (C) 255,259 (1969).

As a second essential ingredient, the composition of this invention includes one or more sources of nitrogen. Illustrative of useful nitrogen sources are urea, ammonia, and ammonium and nitrate compounds, such as ammonium nitrate, potassium nitrate, ammonium sulfate, calcium nitfate, ammonium phosphate, ammonium polyphosphate and the like. Other useful sources of nitrogen include water-soluble urea formaldehyde polymers such as methyolurea, methyleneureas and mixtures thereof. Illustrative of such useful water-soluble urea formaldehyde polymers are those whose preparation and use are described in detail in Justice U.S. Patent No. 3,462,256. Still other useful nitrogen sources include water-insoluble urea formaldehyde polymers such as ureaform. Illustrative of useful water-insoluble urea formaldehyde polymers are the compounds whose preparation and some are described in detail in Formaini U.S. Patent No. 3,677,736 and Moore U.S. Patent No. 4,033,745. Water-soluble nitrogen sources are preferred for use in the practice of the invention, and ammonia, urea, ammonium nitrate, and water-soluble urea formaldehyde polymers are particularly referred. Amongst these particularly preferred polymers, urea and water-soluble urea formaldehyde polymers are most preferred.

The amount of the nitrogen source included in the foliar fertilizer composition is not critical, and any amount known to those skilled in the art for use in foliar fertilizer compositions can be employed. Normally the amount employed will vary depending on the phytotoxic effect on the plant foliage, the times of

application of the composition to the plant and frequency of such application and the like. In the preferred embodiments of this invention, the quantity of the nitrogen source may vary from about 0.5 to about 50 weight percent N based on the total weight of the compositions and in the particularly preferred embodiments of the invention the quantity of nitrogen source may vary from about 1 to about 35 weight percent N on the same basis. In the most preferred embodiments of the invention, the quantity of nitrogen source may vary from about 3 to about 25 on the above referenced basis.

The fertilizer composition of this invention preferably includes sources of potassium, sulfur and phosphorus. The sources of potassium, sulfur and phosphorus employed are not critical but are preferably in the form of water soluble salts containing these materials. Illustrative of useful potassium salts are potassium chloride, potassium sulfate, potassium phosphytotoxic- phate, potassium carbonate, potassium bicarbonate, potassium nitrate, potassium thiosulfate, potassium bisulfate, potassium polyphosphate, potassium ammonium polyposphate and the like. Useful sulfur containing salts include calcium sulfate, potassium sulfate, calcium polysulfate, ammonium sulfate, magnesium sulfate, sodium sulfate, potassium thiosulfate, ammonium thiosulfate, magnesium thiosulfate, sodium thiosulfate, zinc thiosulfate, zinc sulfate, manganese sulfate, iron sulfate, iron thiosulfate, cobalt sulfate, cuprous sulfate, cupric sulfate, cupric thiosulfate and the like. The phosphorus requirements can be satisfied by various phosphate salts such as ammonium or potassium orthophosphates, pyrophosphates, metaphosphates and other condensed linear and non-linear polyphosphates. Condensates of sulfur and phosphorus and nitrogen such as phosphoryl triamide, phosphoronitrilic hexamide and like condensates may also be used. Preferably, some portion of the phosphorus is in the form of a linear polyphosphate, although some orthophosphate and/on pyrophosphate

can also be present. In these preferred embodiments, the number of phosphate groups in the polyphosphate usually ranges from 2 to about 10.

The concentrations of phosphorus, potassium and sulfur are expressed on a $P_2O_5$, $K_2O$ and S weight basis, respectively. In the preferred embodiments, the quantity of phosphorus is at least about 0.5 to 35 weight percent P (expressed as $P_2O_5$); the quantity of potassium is at least about 0.5 to 30 weight percent (expressed 8s $K_2O$ by weight) and the quantity of sulfur is at least from about 0.5 to about 10 weight percent (expressed as S by weight). In the particularly preferred embodiments, the weight percent of phosphorus may vary from about 1 to about 15 weight percent, the weight percent of potassium may vary from about 1 to about 10, and the weight percent of sulfur may vary from about 1 to about 5, each expressed on the above referenced basis. Amongst these particularly preferred embodiments most preferred are those embodiments in which the weight percent phosphorus may vary from about 1 to about 10, the weight percent of potassium may vary from about 1 to about 5 and the weight percent of sulfur may vary from 1 to 3.

The composition of this invention includes a water component. The amount of water employed is not critical to the advantages of the invention and can be varied widely as desired. Water is preferably present in concentrations of up to about 90% based on total composition weight. The water concentration should be adequate to ensure adequate dispersion of the nutrients and in the preferred embodiments of the invention should be adequate to provide a product that is capable of being stored for reasonable times at the lowest expected ambient temperature, preferably 32°F, without the components ralting out of solution to any significant degree.

Other micronutrients such as boron, zinc, iron, manganese, copper, molybdenum, cobalt and the like,

either individually or in mixtures, may be included in the composition of this invention to correct micronutrient trace metal deficiencies. Usually these micronutrients are added in the form of aqueous solutions of water soluble salts or complexes of micronutrient trace metals. Suitable water soluble salts include the sulfate, nitrate, halide, carbonate, bicarbonate, bisulfate, thiosulfate, potassium, ammonium, sodium, and the like salts of the aforementioned micronutrient trace metals. In addition, various chelating agents can be used to insure water-solubility of the applied trace metals. These chelating agents have two or more atoms, commonly referred to as dentate centers, in the molecule which are capable of forming an ionic or coordinate covalent bond with multivalent metal ions. The compounds are commonly called bidentate or polydentate compounds in reference to the number of dentate groups per molecule. The most common agents have oxygen and/or nitrogen atoms at such centers which are spaced in the molecule to form a 5, 6 or 7 member ring when the multivalent metal ion is bridged across the centers. Such organic compounds thus have at least two dentate centers, i.e., nitrogen or oxygen atoms which are separated by 1 to about 3 carbon atoms. Typtcal substituents in organic molecules which furnish the oxygen and/or nitrogen centers are aldehyde groups, nitro groups, amide groups, carboxyl groups, ester group, ketone groups, nitroso groups, hydroxyls, etc.

Examples of chelating agents suitable for use in accordance with the invention are:

citric acid,
ethylenediamine,
mono-sodium citrate,
N-methylethylenediamine,
N-ethyethylenediamine,
N-n-propylenediamine,
N-isopropylethylenediamine,
N-n-butylethylenediamine,

N,N-dimethylethylenediamine,
N,N-diethylethylenediamine,
N,N'-dimethylethylenediamine,
N,N'diethylethylenediamine,
N,N'-di-n-propylethylenediamine,
propylenediamlne,
2,2-dimethyl-1,2-diaminoethane,
1,3-dimethyl-2-,3-diaminobutane,
trimethylenediame,
2,2-dimethyl-1,3-diaminopropane,
2-hydroxy-1,3-diaminopropane,
tetramethylenediamine,
pentamethylenediamine,
ethylenediamine-N,N'-dipropionic acid,
N-butylethylenediaminetriacetic acid,
N-cyclohexylethylene-diaminetriacetic acid,
N-hydroxyethylethylenediaminetriacetic acid,
ethylenediaminetetraacetic acid,
trimethylenediaminetetraacetic acid,
tetramethylenediaminetetraacetic acid,
pentamethylenediaminetetraacetic acid,
1,2-diaminocyclohexane-N,N'-tetraacetic acid,
thylenediamine-N,N'dipropionic-N,N'-diacetic acid,
ethylenediamine-N,N'-tetrapropionic acid,
N-hydroxyethyl-N,N',N"-diethylenetriamine-tetraacetic acid, and
diethylenetriaminepentaacetic acid.

The fertilizer composition of this invention may include other optional ingredients to improve the effectiveness of the composition, or to provide other beneficial biological effects. For example, the absorption of the composition by the foliage of plants can be accelerated by incorporation of minor amounts, e.g., from about 0.01 to about 10, preferably from about 0.01 to about 5 weight percent, of a surfactant. In the particularly preferred embodiments of the invention, the amount of surfactant may vary from about 0.05 to about 3

weight percent and in the most preferred embodiment, may vary from about 0.05 to 1 weight percent. The surfactant improves the spreading of the composition on the foliage to achieve an even coverage and also assists in absorption of the fertilizer into the foliage. Suitable surfactants include cationic, anionic and nonionic types as well as mixtures thereof.

Examples of the cationic surfactants include: fatty amines, e.g., dodecylamine, octadecylamine; alkylarylamines, e.g., dodecyl aniline; fatty amides such as fatty imidazolines, e.g. undecylimidazoline prepared by condensing lauric acid with ethylene diamine, quaternary alkyl and aryl ammonium salts and hydrates, e.g., cetyltriethyl ammonium cetyl sulfate; quaternary ammonium basis of fatty amines of disubstituted diamines, e.g., oleyl methylamino ethylene diethylamine methyl sulfate, and the like.

Examples of useful anionic surfactants include the following: fatty acid glyceride sulfonates and fatty acid sulfonates; e.g., sulfonated cottonseed oil, sulfonated oleic acid, sulfonated sperm oil, sulfonated tallow, etc.; sulfonated fatty amides, e.g., sulfonated amide of ricinoleic acid, sodium salt of sulfuric ester of oleyl dibobutyl amide, etc.; sulfonated anilides of fats, e.g., sodium salt of sulfuric ester of oleylmethyl anilide; amides of aminosulfonic acids, e.g., sodium sulfonated of oleylmethyl tauride; amides from condensation of fatty acid chlorides with amino acids, e.g., sodium salt of oleyl sarcoside; sulfonated aromatic hydrocarbone, e.g., benzene sulfonic, naphthalne sulfonic acids and their ammonium and alkali metal salts, etc. alkylaryl sulfonates, e.g., dodecylbenzene sulfonates octadecylbenzene sulfonates and the like.

The composition of this invention may also include one or more emulsifying or dispersing agents. The type of dispersing or emulsifying agents employed is not critical, and the choice of such agents and the amount employed is dictated by the nature of the composition

and the ability of such agents to facilitate dispersion of the various components of the composition. Generally, it is desirable to use as little of the agents as possible, consistent with the desired dispersion of the various components in the composition so that rain does not re-emulsify the various components after they are applied to foliage of plants and wash them off. Nonionic, anionic, amphoteric or cationic dispersing or emulsifying agents or mixtures thereof can be employed. Illustrative of useful agents are the condensation products of alkylene oxides with phenols and organic acids, alkylarylsulfonates, complex ether alcohols, quaternary ammonium compounds and the like.

Illustrative nonionic surfactants include the polyethylene oxide condensates with hydrophobic groups having a reactive hydrogen. The hydrophobic group can have from about 8 to 5 carbon atoms and from 2 to about 15 molecular weights of a hydrophilic group. The hydrophobic ground can be selected from a variety of organic compounds having one or more reactive hydrogens including fatty alkyl or alkenyl alcohols, fatty acids, fatty amines, fatty amides, esterified hexitans or alkyl or alkenyl phenols and the like.

The effectiveness of the composition can also be improved by incorporation of other adjuvants, as for example, humectants, such as molasses, carbowax, propylene glycol, glycerine, lecithin and the like.

Various persticides can be incorporation with the aforementioned solutions to obtain a combined fertilization-pesticidal treatment. The pesticides can be herbicides having a selective action for undesired vegetation or tree species or can be insecticides, larvicides, miticides, nematocides and the like. These pesticides can be synthetic or naturally occurring chemicals.

Various plant growth regulants in addition to the alpha-oximino alkanoic acid, substituted ureas and thiourea compounds can be included in the composition of this invention. Illustrative of useful plant growth

regulants are auxins such as auxins based on the phenoxyalkanoic acid structure as for example 2,4-dichlorophenoxyacetic acid (2,4-D) and the like; auxins based on the indolealkanoic acid structure, as for example, indoleacetic acid (IAA); and auxins based on the naphthalenealkanoic acid structure as for example naphthaleneacetic acid and the like; cytokinins, such as benzyladenine, kinetin, zeatin, and the like; and other plant growth regulants, such as triiodobenzoic acid (TIBA), abscissic acid and the like.

The composition of this invention can be conveniently formulated according to the conventional methods known to those of skill in the art and accordingly will not be described in detail. Briefly stated, one method of formulating the composition of this invention is merely dissolving selected sources of the desired essential and optional components in an appropriate solvent preferably a non-phytotoxic one such as water.

The foliar fertilizer compositions of this invention are preferably substantially free of undissolved fertilizer solids. However, it is preferred to employ concentrated solutions, and to apply the solutions in the form of a fine mist. Conventional field spraying equipment can be used, including sprayers pulled through the fields by tractors, as well as aerial spraying equipment. While the solution concentrations (as distinguished from the nutrient ratios) are not critical, total solid concentrations on a solids to total solution weight basis can advantageously range from about 30 to about 45% solids. It is advantageous to add a suffactant to the foliar compositions.

The composition of this invention can be used effectively to increase the yields of a wide variety of plants in accordance with the method of this invention. The method and composition are particularly applicable to the cultivation of soybeans, including both Northern and Southern varieties. However, it can also be applied

to other legume field crops which are raised for the production of dry seeds, such as dry beans, dry peas, lentils, check peas, pigeon peas, peanuts, and cowpeas, as well as to vegetable crops such as tomato, potato, melons, and members of the mustard family such as cabbage and broccoli. The method is also believed to be applicable to the cultivation of corn (maize) and other cereal grain crops, including sorghum, wheat, oats, barley, rye, millet, and rice, as well as other field crops believed to require nutrient ratios similar to corn for foliar feeding such as rape, safflower, sunflowers, and sesame. The composition and method of this invention can also be used with ornamental plants; fiber plants, such as cotton, flax and the like; pasture crops, such as grasses, alfalfa, and the like; or forest crops as for example, conifers such as pine, cedar, fir and hemlock, and hardwoods such as oak, teak, and mahogany; or fruit crops such as cherry, almond, citrus and apple.

Timing of application of the composition of this invention is not critical, and the composition can be conveniently applied to plant foliage at anytime from the beginning of the foliage growth stage throughout the growing season. The composition can be applied in a single application or mulitple applications can be made if desired.

The rate of application should be such that sufficient composition is applied to the plant to obtain the desired increase in plant yield. The rate of application will depend on a number of factors, such as environmental conditions, type of crop and the like. It has also been found that timing and rate of application bear a relationship to one another and to the crop to which they are applied, such that the rate of application and the timing thereof bear a relationship to the yield increase.

The composition is usually applied at a rate of from about 1 to about 660 pounds of nitrogeneous

nutrients per acre (1.1 to about 660 kg per ha) in a total applied aqueous volume of from about 3 to about 1500 gallons per acre (28 to about 14,100 liters per ha). In the preferred embodiments of the invention like composition is applied at a rate of from about 2 to about 200 pounds of nutrients per acre (2.2 to about 220 kg per ha) in a total applied aqueous volumes of from about 6 to about 250 gallons per acre (55 to about 2338 liters per ha), and in the particularly preferred embodiments at a rate of from about 3 to about 30 pounds per acre (3.3 to about 33 kg/ha) in a total volume of from about 3 to about 75 gallons per acre (28 to about 700 liters per ha).

An especially effective embodiment of the composition of this invention is as follows:

a. $H_2O$: from about 25% to about 90% as percent by weight);

b. Urea, ammonium salts, nitrate salts and other source of nitrogen either singly or in any combination: from about 0.5% to about 50%, preferably from about 3% to about 35% (expressed as percent N by weight);

c. Phosphorus: from about 0.5% to about 35%, preferably from about 1% to about 25% (expressed as percent $P_2O_5$ by weight);

d. Potassium: from about 0.5% to about 30%, preferably from about 1% to about 10% (expressed as percent $K_2O$ by weight);

e. Sulfur: from about 0.5% to about 10%, preferably from about 1% to about 5% (expressed as percent S by weight);

f. Alpha-oximino alkanoic acid, substituted urea and/or substituted thiourea compounds: from about 0.01% to about 10%, preferably from about 0.05% to about 2% (expressed as percent by weight); and

g. Other micronutrients such as boron, zinc, magnesium, iron, manganese and copper: None to nominal amounts as desired.

This composition, when used in one preferred method

of this invention, is applied to the foliage of plants such as legume, cereal, pasture, forest, fruit and fiber crops by a fine spray applicator, and results, in most instances, in a significant yield increase at harvest, when applied at the rate of at least 25 pounds "kg/ha" and "lbs/acre" aggregate N-$P_2O_5$-$K_2O$-S- urea and/or thiourea per acre (28 kg per ha) in the following proportions:

| Component | Rate of Application, kg/ha |
|---|---|
| Nitrogen (as N) | from about, 0.50 to about 50 lbs/acre (0.55 to about 55 kg/ha), preferably from about 1 to about 35 lbs per acre (1.1 to about 38.5 kg/ha) |
| Phosphorus (as $P_2O_5$) | from about, 0.5 to about 35 lbs per acre (0.55 to about 38.5 kg/ha), preferably from about 1 to 35 lbs per acre (1.1 to about 38.5 kg/ha) |
| Potassium (as $K_2O$) | from about, 0.5 to about 30 lbs/acre (0.55 to about 33 kg/ha), preferably from about 1 to about 10 lbs per acre (1.1 to about 11 kg/ha) |
| Sulfur (as S) | from about, 0.5 to about 10 lbs/acre (0.55 to about 11 kg/ha), preferably from about 1 to about 5 lbs/acre (1.1 to about 5.5 kg/ha) |
| Alpha-oximino Alkanoic acid, substituted Urea and/or substituted Thiourea compounds | from about, 0.01 to about 10 lbs/acrea (0.011 to about 11 kg/ha), preferably from about 0.05 to about 2 lbs/acre (0.055 to about 2.2 kg/ha). |

In the presently preferred embodiment, the aggregate rate of application is from about 40 to about 150 lbs of N-S-$P_2O_5$-$K_2O$-alpha-oximino alkanoic acid, substituted urea and/or substituted thiourea compounds per acre, (44

to about 165 kg/ha) preferably from about 40 to about 75 lbs of N-S-$P_2O_5$-$K_2O$- alpha-oximino alkanoic acid substituted urea and/or thiourea compounds per acre (44 to about 83 kg/ha).

The following specific examples further illustrate the invention.

## Example I

The effect of a foliar fertilizer in combination with various substituted ureas and/or thioureas was studied in the field in New York State. In these studies, an aqueous solution containing 12% urea (expressed is % N by weight), 4% of a mixture of ortho, pyro and hi her polyphosphates (expressed as % $P_2O_5$, by weight), 4% potassium phosphate or sulfate (expressed is % $K_2O$ by weight), and 0.5% potassium or ammonium sulfate (expressed as % S by weight) (the solution hereinafter referred to as "Fertilizer") was applied (93.5L/ha) with and without 1,3-dibenzyl thiourea (0.40% wt/wt) to corn (Pioneer variety 3901) in New York at the 12-leaf and brown silk stage of gr with. An aqueous solution containing 0.40% (wt/wt) of 1,3-dibenzylthiourea was applied to corn at the same rate as the other solution. Gelatin (1% wt/wt) was included in all solutions. The relative effect on grain yield is illustrated in the following Table I.

Table I

| | % of Control Yield | |
|---|---|---|
| Treatment | 12-Leaf | brown silk |
| Untreated Control | 100 | 100 |
| Dibenzylthiorea alone | 119 | 103 |
| Fertilizer alone | 115 | 133 |
| Dibenzylthiourea +Fertilizer | 142 | 143 |

## Example II

Fertilizer was applied (10 gal/acre) (93.5L/ha) with and without 1,3-dibenzylthiourea (0.40% wt/wt) at the brown silk stage to corn (Pioneer variety 396) in New York. An aqueous solution of 1,3-dibenzylthiourea (0.40% wt/wt) was applied at the same time in the same

manner as the other treatments. Gelatin (1% wt/wt) was included in all solutions. The relative effect on grain yield is illustrated in the following Table II.

Table II

| Treatment | % of Control Yield |
|---|---|
| Untreated Control | 100 |
| Dibenzylthi urea alone | 108 |
| Fertilizer alone | 104 |
| Dibenzylthiourea & Fertilizer | 111 |

Example III

Fertilizer was applied (10 gal/acre) (93.5L/ha) with and without 1,3<diallylthiourea (0.40% wt/wt) at the brown silk growth stage to corn (Pioneer variety 3901) in New York. An aqueous solution containing 0.40% (wt/wt) of 1,3-diallylthiourea was applied to corn at the same rate as the other solution. Gelatin (1% of wt/wt) was included in all solutions. The relative effect on grain yield is illustrated in the following Table III.

Table III

| Treatment | % Control of Yield |
|---|---|
| Untreated Control | 100 |
| Diallylthiourea alone | 96 |
| Fertilizer alone | 106 |
| Diallylthiourea + Fertilizer | 110 |

Example IV

Fertilizer was applied (10 gal/acre) (93.5L/ha) with and without 1,3 diallylthiourea (0.20% wt/wt) at the brown silk growth stage to corn (Pioneer variety 3780) in Iowa. An a ueous solution containing 0.40% (wt/wt) of 1,3-diallylthiourea was applied to corn at the same rate as the other solution. Gelatin (1% wt/wt) was included in all solutions. The relative effect on grain yield is illustrated in the following Table IV.

Table IV

| Treatment | % Control of Yield |
|---|---|
| Untreated Control | 100 |
| Diallylthiourea alone | 95 |
| Fertilizer alone | 110 |
| Diallylthiourea + Fertilizer | 113 |

Example V

Fertilizer was applied (10 gal/acre) (93.5L/ha) with and without 1,3-dibenzylthiourea (0.20% wt/wt) to soybeans (variety Evens) in New York at the R2 stage of growth. An aqueous solution containing 0.40% (wt/wt) of 1,3- dibenzylthiourea was applied to soybeans at the same rate as the other solution. Gelatin (1% wt/wt was

included in all solutions. The relative effect on grain yield is illustrated in the following Table V.

Table V

| Treatment | % Control of Yield |
|---|---|
| Untreated Control | 100 |
| Dibenzylthiourea alone | 110 |
| Fertilizer alone | 83 |
| Dibenzylthiourea + Fertilizer | 113 |

Example VI

Fertilizer was applied (10 gal/acre) (93.5L/ha) with and without 1,3 diallylthiourea (0.20% wt/wt) to two varieties of soybeans, Hodgson and Evans, in New York at the R2 stage of growth. In aqueous solution containing 0.40% (wt/wt ) of 1,3-diallylthiourea was applied to soybean at he same rate as the other solution. Gelatin (1% wt/wt) was included in all solutions. The relative effect on grain yield is illustrated in the following T ble VI.

Table VI

| | % Control of Yield | |
|---|---|---|
| Treatment | Hodgson | Evans |
| Untreated Control | | |
| Diallylthiourea alone | 98 | 99 |
| Fertilizer alone | 97 | 100 |
| Diallylthiourea + Fertilizer | 102 | 107 |

Example VII

Fertilizer was applied (10 gal/acre) (93.5L/ha) with and without 1,3-diallylthiourea (0.40% wt/wt) to soybeans, in New York at the R4 stage of growth. In aqueous solution containing 0.40% (wt/wt) of 1,3-diallylthiourea was applied to soybean at the same rate as the other solution. Gelatin (1% wt/wt) was included in all solutions. The relative effect on grain yield is illustrated in the following Table VII.

Table VII

| Treatment | % Control of Yield |
|---|---|
| Untreated Control | 100 |
| Diallylthiourea alone | 99 |
| Fertilizer alone | 100 |
| Diallylthiourea + Fertilizer | 107 |

EXAMPLE VIII

The effect of combinations of foliar fertilizer and alpha-aximino alkanoic acid compounds on yield of maize (Pioneer variety 396) was evaluated in a field trial in New York State. In these trials, an aqueous solutions containing 12% urea (expressed as % nitrogen), 4% of a mixture of ortho, pyro and higher polyphosphates (expressed as % $P_2O_5$), 4% potassium phosphate or sulfate salts (expressed as % $K_2O$), and 0.5% potassium or ammonium sulfate salts (expressed as % S), (hereinafter referred to as "Fertilizer") with and without 0.40% alpha-oximiuo caproic acid was sprayed on the maize at the rate of 10 gal/acre at the 12-leave stage of development. Another aqueous solution containing 0.40% wt/wt alpha-oximino caproic acid was applied to the maize at the same rate and growth period as the first solution. Each of the aforementioned aqueous solutions included 1% gelatin (wt/wt/) as an additional ingredient. The relative effects on % yield resulting from application of these solutions are set forth in the following Table VIII:

Table VIII

| Treatment | % of Control Yield |
|---|---|
| untreated control | 100 |
| alpha-oximino caproic acid alone | 95 |
| Fertilizer alone | 97 |
| Fertilizer + alpha-oximino caproic acid | 114 |

EXAMPLE IX

The effect of combinations of foliar fertilizer and alpha-oximino alkanoic acids on yield of soybeans (variety Hodgson) was examined in a field trial in New

York. Fertilizer was sprayed (10 gal/acre) (93.5L/ha) with and without alpha-oximino caproic acid (0.40% wt/wt) at the R2 and R4 stage of development. An aqueous solution containing alpha-oximino caproic acid (0.40% wt/wt) was also applied to soybean at the same rate and growth period as the other solutions. Gelatin (1% wt./wt) was included in all solutions. The relative effects on yield are set forth in the following Table IX:

Table IX

| Treatment | % Yeild |
|---|---|
| untreated control | 100 |
| alpha-oximino caproic acid alone | 100 |
| Fertilizer alone | 102 |
| Fertilizer + alpha-oximino caproic acid | 126 |

EXAMPLES X-XXII

Employing the procedure of EXAMPLES VII and IX other alpha-oximino alkanoic acid compounds may be applied to crop plants increase crop yields. Representative examples of useful compounds and crop plants whose yield may be increased by applicaiton of the composition of this invention are set forth in the following Table X:

Table X

| Ex. | Alpha-oximino Alkanoic Acid Compound | Crop Plant |
|---|---|---|
| X | Methyl 6-nitro-2-oximino-hexanoate | Soybean |
| XI | Ethyl 6-nitro-2-oximino-hexanoate | Wheat |
| XII | 6-Nitro-2-oximino-hexanamide | Corn |
| XIII | 6-Nitro-2-oximino hexanoic acid | Peas |
| XIV | 10-Nitro-2-oximino-decanoic acid | Dry Bean |
| XV | Sodium 6-nitro-2-oximino-hexanoate | Oats |
| XVI | 2-Oximinoheptanoic acid | Sorghym |
| XVII | 2-Oximinodecanoic acid | Sugarcane |
| XVIII | 2-Oximinododecanoic acid | Rice |
| XIX | N,N-Diethyl 6-nitro-2-oximino | Cowpeas |
| XX | Dodecyl 2-oximino decanoate | Soybean |
| XXI | Potassium 10-nitro-2-oximino decanoate | Barley |
| XXII | 4-Methyl020oximino hexanoic acid | Corn |

WHAT IS CLAIMED IS:

1. In an improved aqueous foliar fertilizer composition of the type which is applied to the foliage of plants, said composition containing one or more sources of nitrogen, one or more sources or potassium, one or more sources of phosphorus, one or more sources of sulfur and one or more sources of micronutrients, the improvement comprises a synergistically effective amount of one or more compounds selected from the group consisting of substituted urea and thiourea compounds of the formula:

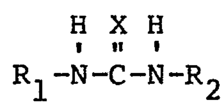

and alpha-oximino alkanoic acid compounds having the general formula:

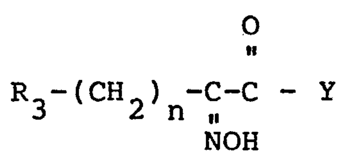

and ester, amide, sulfamide and salt derivatives of said acid compounds, wherein

X is oxygen or sulfur;

$R_1$ and $R_2$ are the same or different and are individually aliphatic hydrocarbons of 1 to abut 12 carbon atoms or aromatic hydrocarbons of up to about 12 carbon atoms;

n is an integer from 1 to 12;

$R_3$ is selected from the group consisting of hydrogen, alkyl, cycloalkyl, cycloalkenyl, aralkyl, nitro, alkaryl, aryl, heterocyclic, alkenyl and alkynyl; and

Y is selected from the group consisting of OZ, SZ, NZZ' and OZ", wherein Z and Z' are the same or different and are independently selected from teh group consisting of hydrogen, alkyl, cycloalkyl, cycloalkenyl, aralkyl, alkaryl, aryl, heterocyclic, alkenyl and alkynyl, and

wherein Z" is an alkali metal.

2. A composition according to claim 1 wherien said one or more sources of nitrogen are selected from teh group consisting of urea, water-soluble urea formaldehyde polymers, ammonium salts and nitrate salts.

3. A composition according to claim 2 wherein said one or more sources of nitrogen are selected from the group consisting of urea, ammonium salts and nitrate salts.

4. A composition according to claim 3 wherein said source of nitrogen is urea.

5. A composition according to claim 1 wherein said synergistically effective amount of said one or more compounds is at least about 0.01 percent by weight based on the total weight of the composition.

6. A composition according to claim 5 wherein said synergistically effective amount of said one or more compounds is from about 0.01 to about 10 weight percent based on the total weight of the composition.

7. A composition according to claim 6 wherein said synergistically effective amount of said one or more compounds is from about 0.05 to about 2 weight percent.

8. A composition according to claim 7 wherein said synergistically effective amount of said one or more compounds is from about 0.1 to about 1 weight percent.

9. A composition according to claim 1 wherein said one or more compounds are selected from the group consisting of substituted thiourea and urea compounds of the formula:

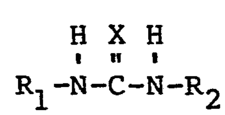

10. A composition according to claim 1 wherein said one or more compounds are selected from the group consisting of alkanoic acid compounds of the formula:

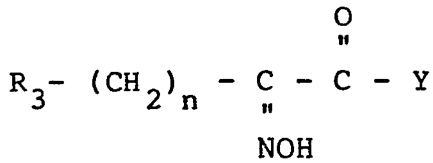

and ester, amide, sulfamide and salt derivatives thereof.

11. A composition according to claim 1 capable of being applied as a foliar spray fertilizer, said composition comprising a solution of the following constituent:

a. $H_2O$: from about 25% to about 90% (by 2 weight);

b. Nitrogen: from about 0.5% to about 50% (% Nitrogen by weight);

c. Phosphorus: from about 0.5% to about 35% ($P_2O_5$ by weight);

d. Potassium: from about 0.5% to about 30% ($K_2O$ by weight);

e. Sulfur: from about 0.5% to about 10% (S by weight);

f. one or more alpha-oximino alkanoic acid, substituted urea and/or substituted thiourea compounds: from about 0.1% to about 10% (by weight); and

g. at least one micronutrient selected from the group consisting of boron, zinc, iron, manganese, molybdenum and copper present in nominal amount.

12. A method of increasing the yield of plants which comprises treating the foliage of said plants with the composition of claim 1.